# EUROPEAN PATENT APPLICATION

(11) **EP 4 345 641 A1**
(43) Date of publication of application: **03.04.2024**
(21) Application number: 23180263.8
(22) Date of filing: 20.06.2023
(51) Int. Cl.: G06F 16/21, G06F 16/27, G06F 16/22

(54) **DATA SYNCHRONIZATION PROGRAM, DATA SYNCHRONIZATION METHOD, AND INFORMATION PROCESSING DEVICE**

(30) Priority: 30.09.2022 JP 2022158359
(71) Applicant: Fujitsu Limited, Kawasaki-shi, Kanagawa 211-8588 (JP)
(72) Inventor: KAWASAKI, Minami, Kawasaki-shi, Kanagawa, 211-8588 (JP); NAKAYAMA, Takayoshi, Kawasaki-shi, Kanagawa, 211-8588 (JP); TAKA, Kenji, Kawasaki-shi, Kanagawa, 211-8588 (JP)
(74) Representative: Hoffmann Eitle

(57) **Abstract**

A data synchronization program including instructions which, when executed by a first information processing device among information processing devices that manages data in relational databases, cause the first information processing device to execute processing including: storing, in a first relational database, data of tables, each table of the tables having relevance to at least any one of the tables, the first relational database being a relational database in which the first information processing device manages data; and in response to a request for transmitting a first table among the tables stored in the first relational database, transmitting to a second relational database in which a second information processing device manages data, data of the first table stored in the first relational database, and data of a second table having relevance to the first table, the second information processing device being any one of the information processing devices.

## Description

### FIELD

The embodiment discussed herein is related to a data synchronization program, a data synchronization method, and an information processing device.

### BACKGROUND

Among databases, a relational database most widely used at present includes a strict transaction function, and may perform a highly efficient update processing and read processing. Therefore, use of a relational database is suitable for a business application that needs to guarantee consistency and integrity in data to be accessed.

Japanese Laid-open Patent Publication No. 11-249943, and Japanese Laid-open Patent Publication No. 2002-7441, and Japanese Laid-open Patent Publication No. 8-305714 are disclosed as related art.

### SUMMARY

### TECHNICAL PROBLEM

However, at present, in a situation where a plurality of companies uses relational databases, it is not possible to synchronize (link) data between the relational databases of the respective companies.

In one aspect, an object of an embodiment is to provide a data synchronization program, a data synchronization method, and an information processing device that are capable of achieving synchronization between relational databases in which data is managed by each of a plurality of information processing devices.

### SOLUTION TO PROBLEM

According to an aspect of the embodiments, there is provided a data synchronization program including instructions which, when executed by a first information processing device among a plurality of information processing devices that manages data in relational databases, cause the first information processing device to execute processing including: storing, in a first relational database, data of a plurality of tables, each table of the plurality of tables having relevance to at least any one of the plurality of tables, the first relational database being a relational database in which the first information processing device manages data; and in response to a request for transmitting a first table among the plurality of tables stored in the first relational database, transmitting to a second relational database in which a second information processing device manages data, data of the first table stored in the first relational database, and data of a second table that has relevance to the first table, the second information processing device being any one of the plurality of information processing devices other than the first information processing device.

### ADVANTAGEOUS EFFECTS OF INVENTION

Synchronization may be achieved between relational databases in which data is managed by each of a plurality of information processing devices.

### BRIEF DESCRIPTION OF DRAWINGS

FIG. 1 is a diagram schematically illustrating a configuration of an inter-organization linkage system according to an embodiment;
FIG. 2A is a diagram illustrating an example of a hardware configuration of a client for a company A, and FIG. 2B is a diagram illustrating an example of a hardware configuration of a server for the company A;
FIG. 3 is a block diagram illustrating functions of the server for the company A;
FIG. 4 is a diagram illustrating an example of table structures of a plurality of tables stored in a database (DB) server for the company A;
FIG. 5 is a diagram illustrating an example of a related information management table;
FIG. 6 is a diagram illustrating an example of data stored in the plurality of tables in the DB server for the company A;
FIG. 7 is a diagram illustrating an example of a synchronization information management table;
FIG. 8 is a flowchart (part 1) illustrating processing of the server for the company A and a server for a company B;
FIG. 9 is a flowchart (part 2) illustrating the processing of the server for the company A and the server for the company B;
FIG. 10 is a sequence diagram for describing processing of registration of table definition information and data registration;
FIG. 11 is a sequence diagram for describing data transmission processing;
FIG. 12A is a diagram illustrating data of a table transmitted to a DB server for the company B in the processing in FIG. 11, and FIG. 12B is a diagram illustrating information registered in the synchronization information management table in the processing in FIG. 11;
FIG. 13 is a sequence diagram (part 1) for describing data update processing;
FIG. 14 is a sequence diagram (part 2) for describing the data update processing;
FIG. 15 is a diagram illustrating data updated in the data update processing with underlines;
FIGs. 16A and 16B are diagrams illustrating before and after update of data stored in the DB server for the company B in the processing in FIG. 14;
FIG. 17 is a diagram (part 1) for describing a modification; and
FIG. 18 is a diagram (part 2) for describing the modification.

### DESCRIPTION OF EMBODIMENTS

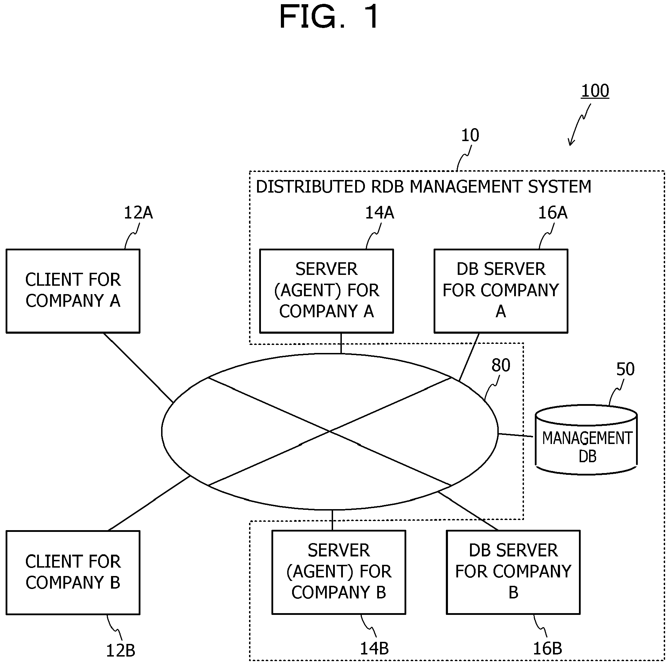

Hereinafter, an embodiment of an inter-organization linkage system will be described in detail with reference to FIGs. 1 to 16B.

FIG. 1 schematically illustrates a configuration of an inter-organization linkage system 100 according to an embodiment. As an example, the inter-organization linkage system 100 includes clients (a client 12A for a company A and a client 12B for a company B) that may be used by a plurality of organizations (for example, the companies A and B) and a distributed relational database (RDB) management system 10. Each device included in the distributed RDB management system 10, the client 12A for the company A, and the client 12B for the company B are coupled to a network 80 such as the Internet. The inter-organization linkage system 100 of the present embodiment is a system for linking and collectively managing data among a plurality of organizations.

### (Client 12A for Company A)

The client 12A for the company A is a terminal used by a user (for example, an administrator or an ordinary employee) under the control of the company A. The user operates the client 12A for the company A to link the client 12A for the company A and a server 14A for the company A through an application programming interface (API). Then, the user may perform table definition, data registration, data update, data deletion, and the like from the client 12A for the company A to a database (DB) server 16A for the company A. Furthermore, the user may synchronize data of a table stored in the DB server 16A for the company A with a DB server for another company from the client 12A for the company A.

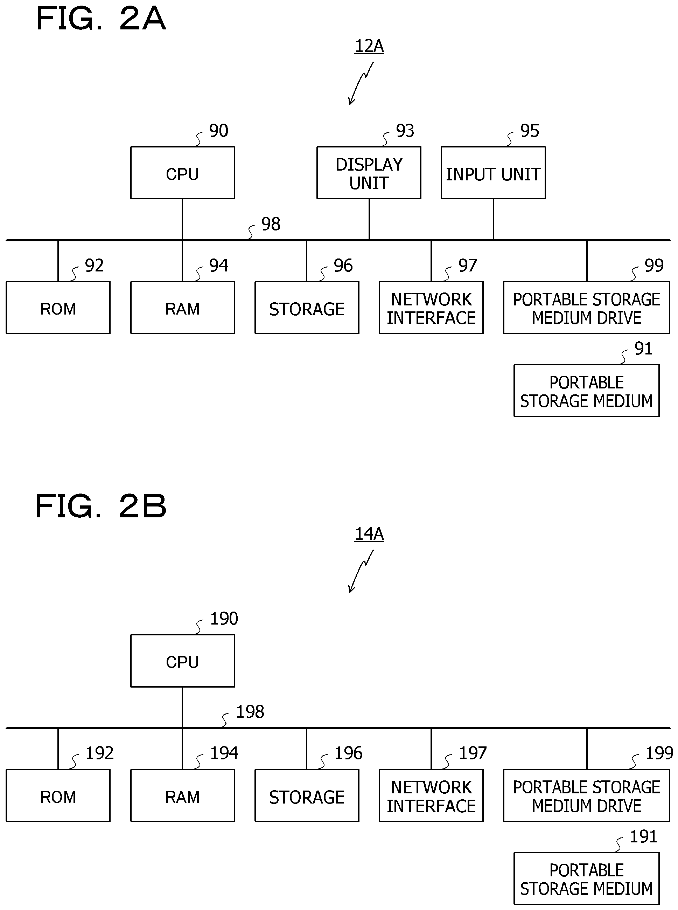

FIG. 2A illustrates an example of a hardware configuration of the client 12A for the company A. As illustrated in FIG. 2A, the client 12A for the company A includes a central processing unit (CPU) 90, a read only memory (ROM) 92, a random access memory (RAM) 94, a storage (solid state drive (SSD) or hard disk drive (HDD)) 96, a network interface 97, a display unit 93, an input unit 95, a portable storage medium drive 99, and the like. The display unit 93 includes a liquid crystal display, an organic electroluminescent (EL) display, and the like, and the input unit 95 includes a keyboard, a mouse, a touch panel, and the like. The portable storage medium drive 99 may read data and a program stored in a portable storage medium 91. Each of these components of the client 12A for the company A is coupled to a bus 98.

### (Client 12B for Company B)

The client 12B for the company B is a terminal used by a user (for example, an administrator or an ordinary employee) under the control of the company B. A hardware configuration, functions, and the like of the client 12B for the company B are similar to those of the client 12A for the company A.

### (Distributed RDB Management System 10)

Returning to FIG. 1, the distributed RDB management system 10 includes the server (agent) 14A for the company A as an information processing device, the DB server 16A for the company A as a relational database, a management DB 50, a server (agent) 14B for the company B, and a DB server 16B for the company B.

### (Server 14A for Company A)

The server 14A for the company A performs, in response to an instruction or a request from the client 12A for the company A, table definition, data registration, data update, data deletion, and the like in the DB server 16A for the company A which is a distributed DB managed by the company A. Furthermore, the server 14A for the company A transmits (synchronizes), in response to an instruction or a request from the client 12A for the company A, data of a table stored in the DB server 16A for the company A to a DB server for another company. In other words, the server 14A for the company A executes self-sovereign data management capable of synchronizing only data needed among data stored in the DB server 16A for the company A in the DB server for the another company. Moreover, the server 14A for the company A updates or deletes, in response to an instruction or a request from the client 12A for the company A, data of a table stored in the DB server 16A for the company A. Furthermore, in a case where there is the same data as the updated or deleted data in the DB server for the another company, the server 14A for the company A also updates or deletes the data.

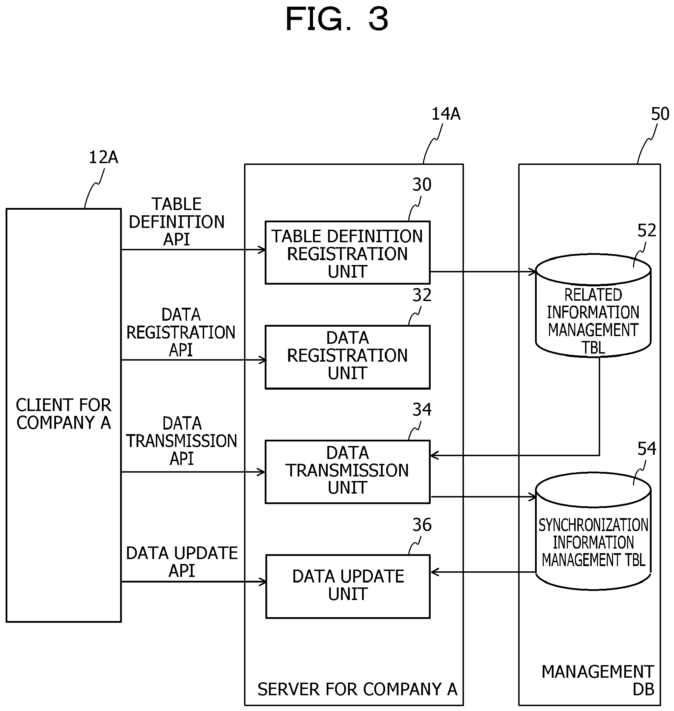

FIG. 2B illustrates an example of a hardware configuration of the server 14A for the company A. As illustrated in FIG. 2B, the server 14A for the company A includes a CPU 190, a ROM 192, a RAM 194, a storage 196, a network interface 197, a portable storage medium drive 199, and the like. Each of these components of the server 14A for the company A is coupled to a bus 198. In the server 14A for the company A, the CPU 190 executes a program (including a data synchronization program) stored in the ROM 192 or the storage 196 or a program read by the portable storage medium drive 199 from a portable storage medium 191, thereby implementing a function of each unit illustrated in FIG. 3. Note that the function of each unit in FIG. 3 may be implemented by, for example, an integrated circuit such as an application specific integrated circuit (ASIC) or a field programmable gate array (FPGA).

### (DB Server 16A for Company A)

The DB server 16A for the company A has a function as a relational database instead of Not only SQL (NonSQL), and manages a plurality of related tables in a state where relevance is maintained. Note that a hardware configuration of the DB server 16A for the company A is similar to that of the server 14A for the company A. Note that the relational database may be held by the server 14A for the company A, and in this case, the DB server 16A for the company A may be omitted.

### (Regarding Functions of Server 14A for Company A)

The server 14A for the company A functions as a table definition registration unit 30, a data registration unit 32, a data transmission unit 34, and a data update unit 36 as illustrated in FIG. 3 by the CPU 190 executing a program.

The table definition registration unit 30 acquires, when a user defines a table structure desired to be registered by using a table definition API in the client 12A for the company A, information regarding the defined table structure (table definition information). Furthermore, the table definition registration unit 30 defines a table in the DB server 16A for the company A by using the acquired table definition information. Moreover, the table definition registration unit 30 registers the acquired table definition information in a related information management table 52 as a first storage unit stored in the management DB 50.

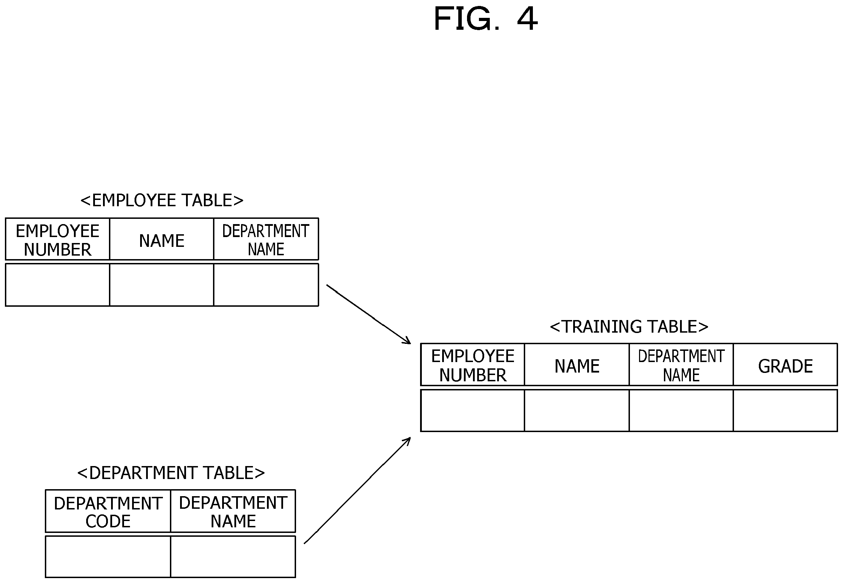

For example, it is assumed that the table definition registration unit 30 acquires definition information of an employee table, a department table, and a training table as illustrated in FIG. 4 as the table definition information. Here, it is assumed that the employee table has columns of "employee number", "name", and "department code", the department table has columns of "department code" and "department name", and the training table has columns of "employee number", "name", "department name", and "grade". Furthermore, it is assumed that the employee table, the department table, and the training table are related to each other.

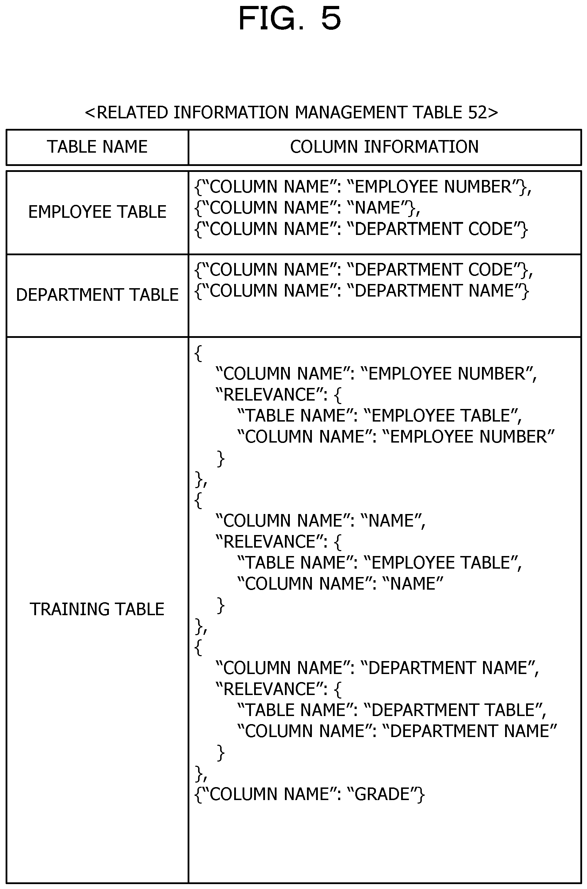

In this case, the table definition registration unit 30 registers the definition information of the tables as illustrated in FIG. 5 in the related information management table 52. Specifically, the names of the columns (column names) included in each table are registered in the related information management table 52. Furthermore, in the related information management table 52, which column of which table each column of the training table is related to is registered.

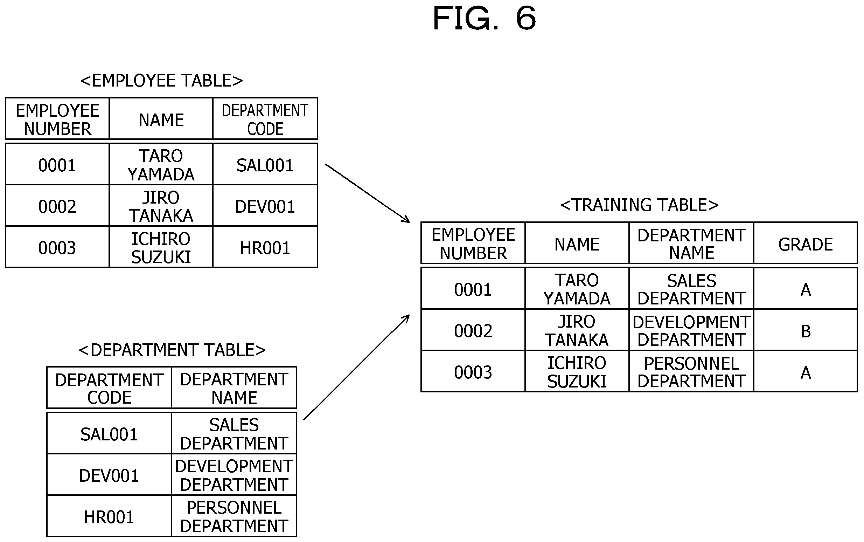

Returning to FIG. 3, when a user registers data desired to be registered in a table by using a data registration API in the client 12A for the company A, the data registration unit 32 acquires the data desired to be registered. Then, the data registration unit 32 registers the acquired data of the table in a table in the DB server 16A for the company A. For example, when data as illustrated in FIG. 6 is acquired, the data registration unit 32 registers the data in FIG. 6 in the tables (FIG. 4) in the DB server 16A for the company A.

The data transmission unit 34 acquires, when a user inputs a request for transmitting data of a table stored in the DB server 16A for the company A to a DB server for another company by using a data transmission API in the client 12A for the company A, the transmission request. Then, the data transmission unit 34 acquires, from the related information management table 52, information regarding a table related to the table to be transmitted. For example, in a case where data of a training table in FIG. 6 is to be transmitted, the data transmission unit 34 acquires information indicating that tables related to the training table are an employee table and a department table from the related information management table 52 in FIG. 5.

Furthermore, the data transmission unit 34 acquires, from the DB server 16A for the company A, the data of the table to be transmitted and data of the table related to the data of the table to be transmitted, transmits the data to the DB server for the another company, and registers the data.

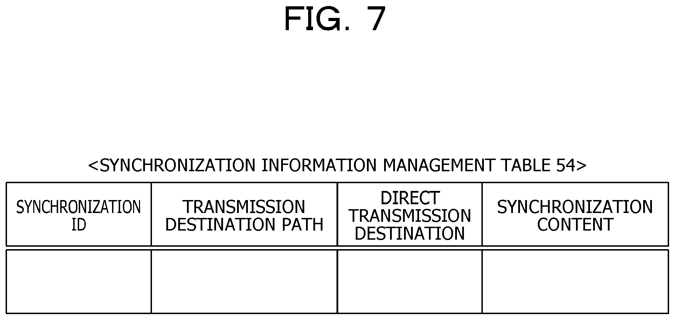

Moreover, the data transmission unit 34 registers information indicating which data of which table is synchronized in which DB server of which company in synchronization information management table 54 as a second storage unit stored in the management DB 50. As illustrated in FIG. 7, information regarding a synchronization identifier (ID), a transmission destination path, a direct transmission destination, and a synchronization content may be registered in the synchronization information management table 54. In the "synchronization ID", identification information allocated for each synchronization processing is stored, and in the "transmission destination path", for example, in a case where the company A transmits data to the company B and then the company B transmits the data to a company C, information "{company B, company C}" is stored. Furthermore, in the "direct transmission destination", in a case where the company A directly transmits the data to the company B, information "company B" is stored. Moreover, in the "synchronization content", detailed information regarding the synchronized table and column is stored.

Returning to FIG. 3, the data update unit 36 acquires, when a user inputs an update request for data of a table stored in the DB server 16A for the company A by using a data update API in the client 12A for the company A, the update request. Then, the data update unit 36 updates the data of the table to be updated stored in the DB server 16A for the company A.

Furthermore, when the update request is acquired, the data update unit 36 refers to the synchronization information management table 54 to confirm whether or not the data of the table for which the update request has been made is synchronized in the DB server for the another company. Then, in a case where the data of the table for which the update request has been made is synchronized in the DB server for the another company, the data update unit 36 also updates the synchronized data of the DB server for the another company.

### (Management DB 50)

As illustrated in FIG. 3, the management DB 50 stores the related information management table 52 and the synchronization information management table 54.

### (Server 14B for Company B and DB Server 16B for Company B)

The server 14B for the company B has a hardware configuration, functions, and the like similar to those of the server 14A for the company A. Furthermore, the DB server 16B for the company B has a hardware configuration, functions, and the like similar to those of the DB server 16A for the company A. In other words, the server 14B for the company B executes table definition and executes data registration, update, and deletion processing in the DB server 16B for the company B which is a relational database in response to a request from a user via the client 12B for the company B. Furthermore, the server 14B for the company B executes processing of synchronizing data stored in the DB server 16B for the company B in a DB server of a company other than the company B.

Note that it is assumed that the inter-organization linkage system 100 in FIG. 1 includes, but not limited to, the servers, the DB servers, and the clients for the companies A and B, and the inter-organization linkage system 100 may further include a server, a DB server, and a client for another company. In other words, the inter-organization linkage system 100 may include servers, DB servers, and clients for two or more companies.

### (Processing of Server 14A for Company A and Server 14B for Company B)

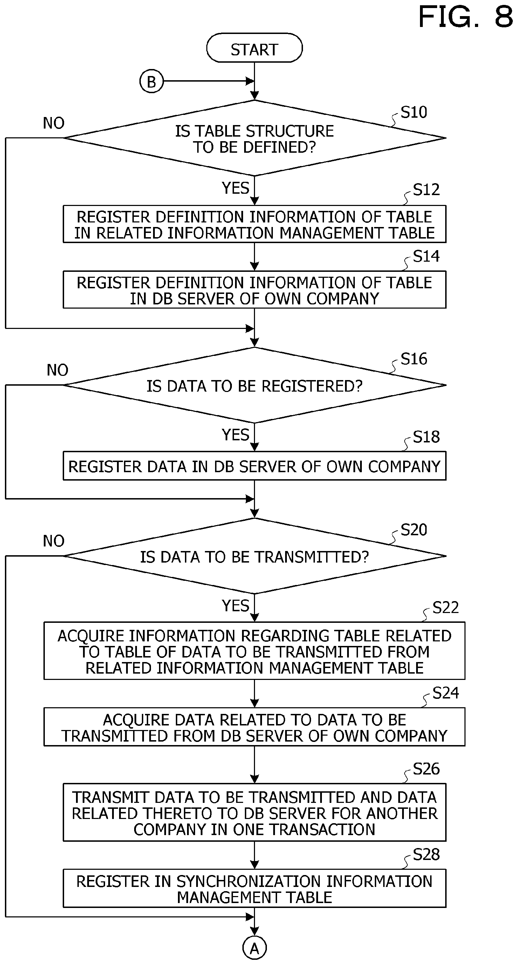

Next, processing of the server 14A for the company A and the server 14B for the company B will be described in detail along a flowchart in FIG. 8 with reference to other drawings as appropriate.

When the processing in FIG. 8 is started, first, in Step S10, the table definition registration unit 30 determines whether or not a request to define a table structure has been transmitted from the client 12A (or 12B) of the own company by using the table definition API. In a case where the determination in Step S10 is positive, the processing proceeds to Step S12, and the table definition registration unit 30 registers definition information of a table in the related information management table 52. Furthermore, in Step S14, the table definition registration unit 30 registers the definition information of the table in the DB server 16A (or 16B) of the own company. Thereafter, the processing proceeds to Step S16. Note that, in a case where the determination in Step S10 is negative, the processing proceeds to Step S16 without through Steps S12 and S14.

When the processing proceeds to Step S16, the data registration unit 32 determines whether a data registration request has been transmitted from the client 12A (or 12B) of the own company by using the data registration API. When the determination in Step S16 is positive, the processing proceeds to Step S18, and the data registration unit 32 registers the data in the table in the DB server 16A (or 16B) of the own company. Thereafter, the processing proceeds to Step S20. Note that, in a case where the determination in Step S16 is negative, the processing proceeds to Step S20 without through Step S18.

When the processing proceeds to Step S20, the data transmission unit 34 determines whether a data transmission request to a DB server for another company has been transmitted from the client 12A (or 12B) of the own company by using the data transmission API. When the determination in Step S20 is positive, the processing proceeds to Step S22, and the data transmission unit 34 acquires information regarding a table related to the table of the data to be transmitted from the related information management table 52.

Next, in Step S24, the data transmission unit 34 acquires data related to the data to be transmitted from the DB server 16A (or 16B) of the own company.

Next, in Step S26, the data transmission unit 34 transmits (synchronizes) the data to be transmitted and the data related thereto to the DB server for the another company in the same transaction. Note that, in a case where there is no table that stores the data to be transmitted in the DB server for the another company, the data is registered after the table is created.

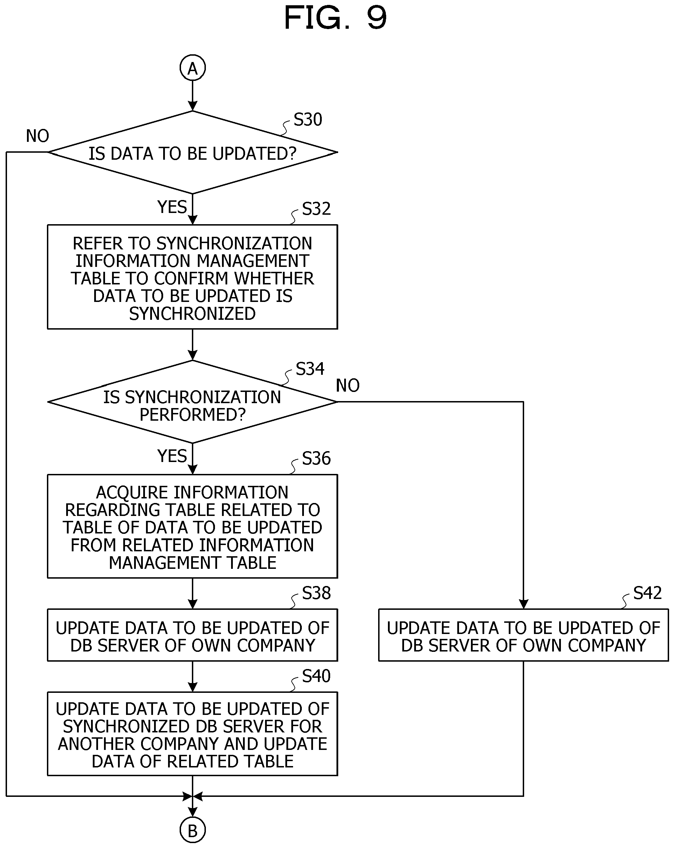

Next, in Step S28, the data transmission unit 34 registers information regarding the synchronized data in the synchronization information management table 54. Thereafter, the processing proceeds to Step S30 in FIG. 9. Note that, in a case where the determination in Step S20 is negative, the processing proceeds to Step S30 in FIG. 9 without through Steps S22 to S28.

When the processing proceeds to Step S30 in FIG. 9, the data update unit 36 determines whether a data update request has been transmitted from the client 12A (or 12B) of the own company by using the data update API. When the determination in Step S30 is positive, the processing proceeds to Step S32, and the data update unit 36 refers to the synchronization information management table 54 to confirm whether the data to be updated is synchronized. Then, in Step S34, the data update unit 36 determines whether or not the data to be updated is synchronized in the DB server for the another company.

In a case where the determination in Step S34 is positive, the processing proceeds to Step S36, and the data update unit 36 acquires information regarding a table related to a table of the data to be updated from the related information management table 52. Next, in Step S38, the data update unit 36 updates the data to be updated of the DB server 16A (or 16B) of the own company. Then, in the next Step S40, the data update unit 36 updates the data to be updated of the synchronized DB server for the another company and updates data of the related table. Thereafter, the processing returns to Step S10.

On the other hand, in a case where the determination in Step S34 is negative, in other words, in a case where the data to be updated is not synchronized in the DB server for the another company, the processing proceeds to Step S42. When the processing proceeds to Step S42, the data update unit 36 updates the data to be updated of the DB server 16A (or 16B) of the own company, and the processing returns to Step S10.

Note that, in a case where the determination in Step S30 is negative, the processing returns to Step S10 without through Steps S32 to S42. Then, thereafter, the processing and determination described above are repeatedly executed.

### (Regarding Specific Example)

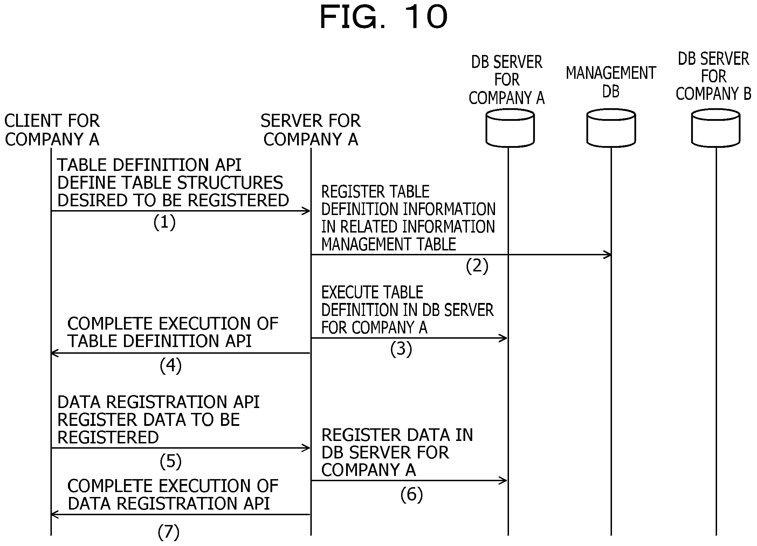

Next, a specific example will be described in detail along sequence diagrams in FIGs. 10, 11, 13, and 14 with reference to other drawings as appropriate.

### (Registration of Table Definition Information and Data Registration)

With reference to FIG. 10, a case will be described where a user of the company A registers, in the DB server 16A for the company A, the table structures of the employee table, the department table, and the training table as illustrated in FIG. 4 and the data of each table as illustrated in FIG. 6.

When the user defines the table structures desired to be registered (FIG. 4) by using the table definition API in the client 12A for the company A, (2) the server 14A for the company A registers table definition information in the related information management table 52 of the management DB 50. In the case of the table structures in FIG. 4, the information as illustrated in FIG. 5 is registered in the related information management table 52.

Next, (3) the server 14A for the company A executes table definition in the DB server 16A for the company A. Thereafter, (4) the server 14A for the company A notifies the client 12A for the company A of end of the table definition API.

Furthermore, (5) when the user registers the data desired to be registered (FIG. 6) by using the data registration API in the client 12A for the company A, (6) the server 14A for the company A registers the data in a table in the DB server 16A for the company A. Thereafter, (7) the server 14A for the company A notifies the client 12A for the company A of end of the data registration API.

### (Data Transmission)

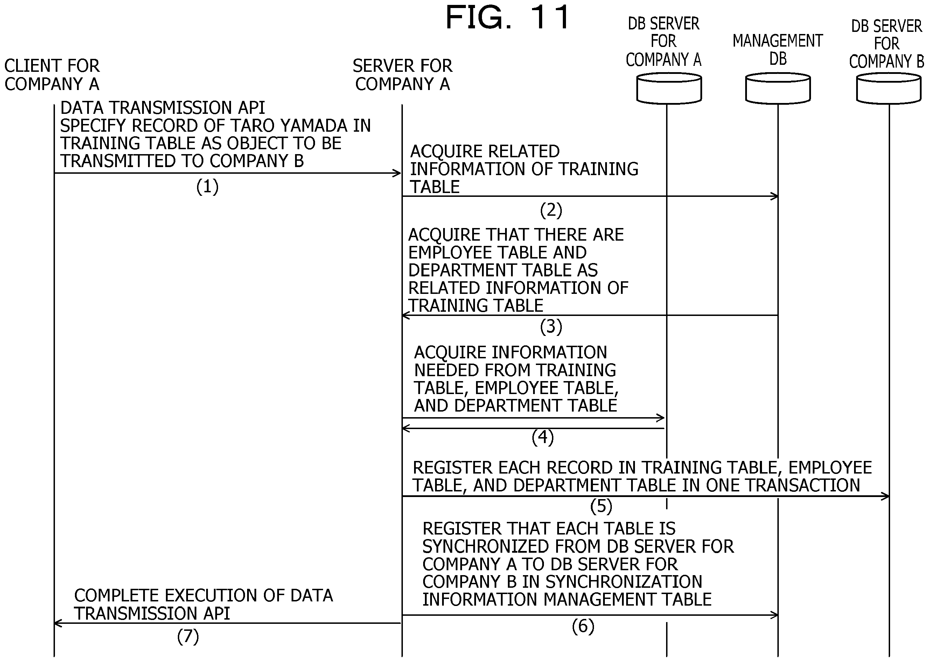

Next, with reference to FIG. 11, a case will be described where a user of the company A transmits (synchronizes) data (record) of "Taro Yamada" in the training table in FIG. 6 stored in the DB server 16A for the company A to the DB server 16B for the company B.

First, the user specifies data (record) desired to be transmitted by using the data transmission API in the client 12A for the company A. Here, it is assumed that the data (record) of "Taro Yamada" in the training table in FIG. 6 is specified. When the data to be transmitted is specified in this manner, (2) the server 14A for the company A refers to the related information management table 52 (FIG. 5) to acquire information regarding a table related to the table to be transmitted (training table). In this case, (3) the server 14A for the company A acquires, from the related information management table 52 in FIG. 5, information indicating that there are the employee table and the department table as the tables related to the training table.

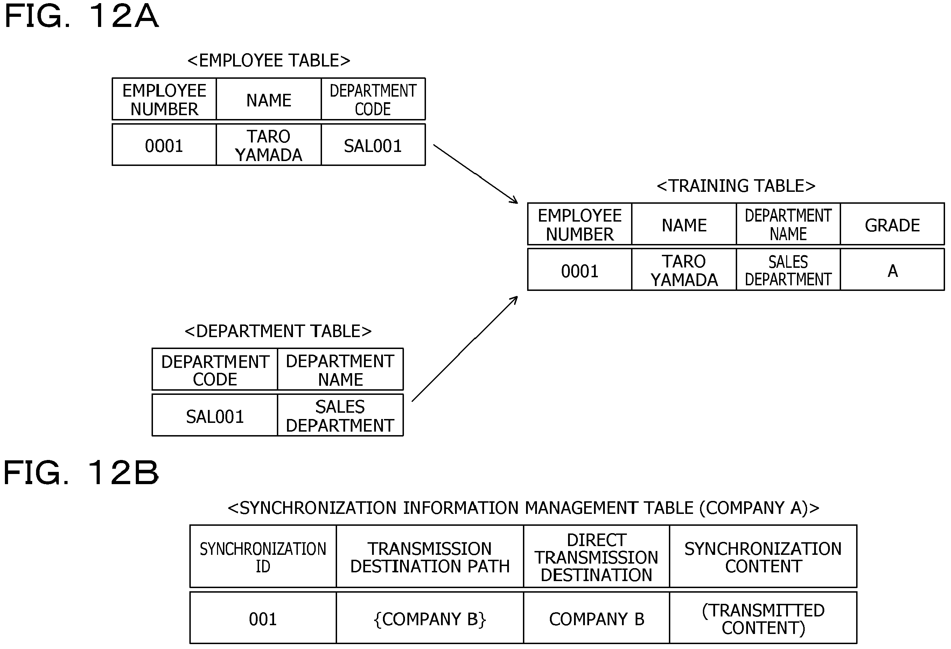

Next, (4) the server 14A for the company A acquires data that needs to be transmitted from the training table, the employee table, and the department table in the DB server 16A for the company A. Specifically, records related to "Taro Yamada" (see FIG. 12A) are acquired from the training table, the employee table, and the department table.

Next, (5) the server 14A for the company A transmits and registers the records in the respective tables (FIG. 12A) acquired in (4) to the DB server 16B for the company B in the same transaction (in one transaction). Note that, in a case where there is no table that stores the transmitted data in the DB server 16B for the company B, the data is registered after the table is created. With this configuration, the data of "Taro Yamada" in the training table is synchronized in the DB server 16A for the company A and the DB server 16B for the company B. At this time, not only the data to be transmitted but also the data having relevance are transmitted to the DB server 16B for the company B in the same transaction, so that it is possible to prevent data inconsistency from occurring in the DB server 16B for the company B.

Next, (6) the server 14A for the company A registers that each table is synchronized from the DB server 16A for the company A to the DB server 16B for the company B in the synchronization information management table 54 stored in the management DB 50. Specifically, data as illustrated in FIG. 12B is registered in the synchronization information management table 54.

Thereafter, (7) the server 14A for the company A notifies the client 12A for the company A of end of the data transmission API.

### (Data Update)

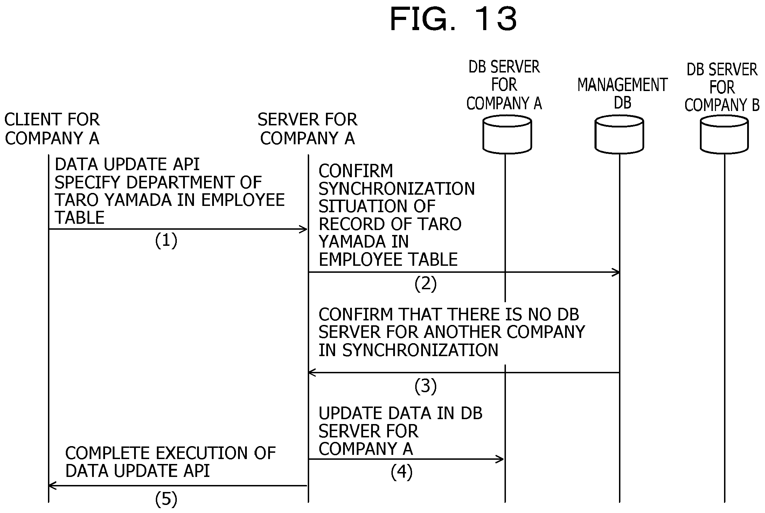

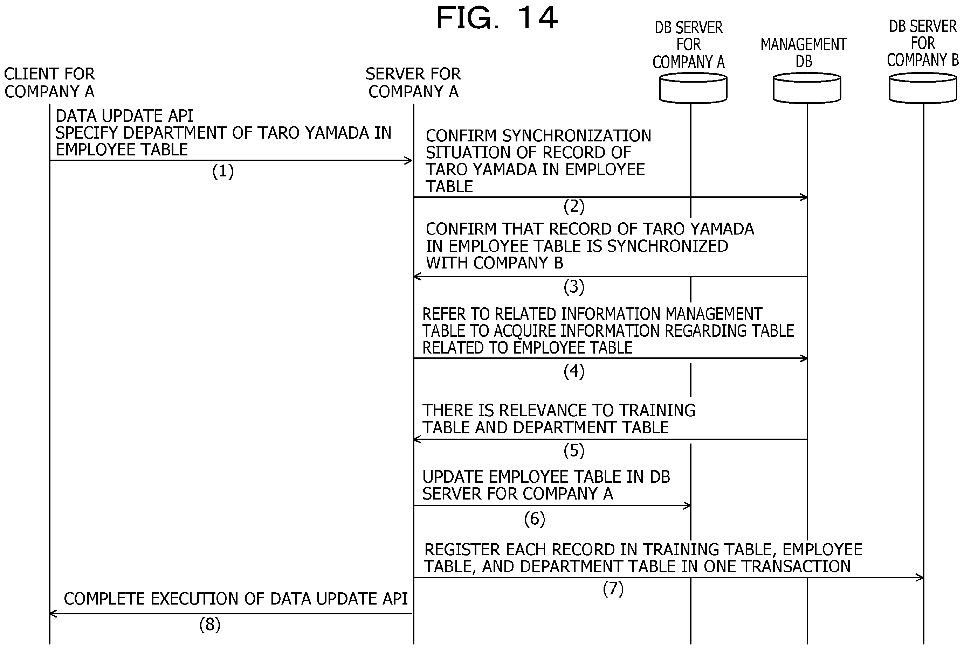

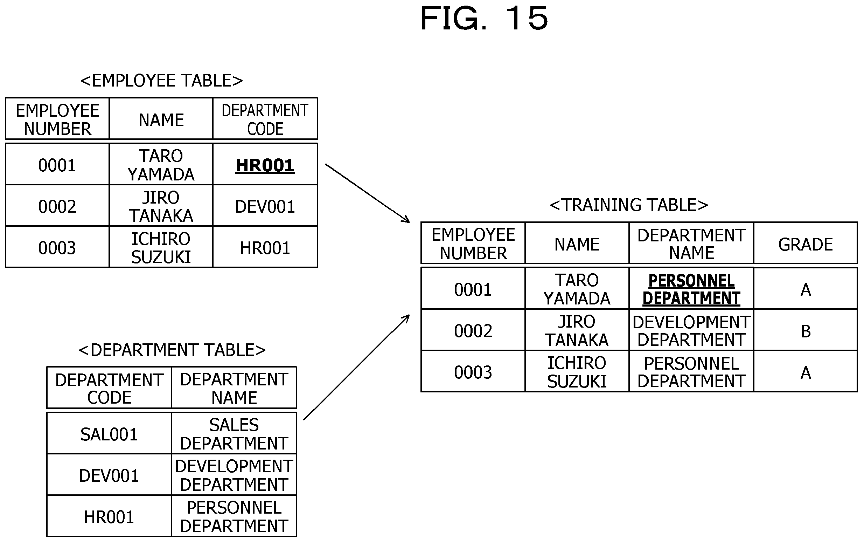

Next, with reference to FIGs. 13 and 14, a case will be described where a user of the company A updates data of a department of "Taro Yamada" in the employee table in FIG. 6 stored in the DB server 16A for the company A as indicated with underlines in FIG. 15.

As illustrated in FIG. 13, (1) first, the user specifies data desired to be updated (here, a department code of "Taro Yamada" in the employee table) by using the data update API in the client 12A for the company A. When the data to be updated is specified in this manner, (2) the server 14A for the company A refers to the synchronization information management table 54 stored in the management DB 50 to confirm a synchronization situation of the record of Taro Yamada in the employee table.
(3) In a case where it is found by this confirmation that there is no DB server for another company with which the record of Taro Yamada in the employee table is synchronized, (4) the server 14A for the company A updates the department code of Taro Yamada in the employee table stored in the DB server 16A for the company A. With this configuration, the employee table and the training table in FIG. 6 are updated as illustrated in FIG. 15.

Thereafter, (5) the server 14A for the company A notifies the client 12A for the company A of end of the data update API.

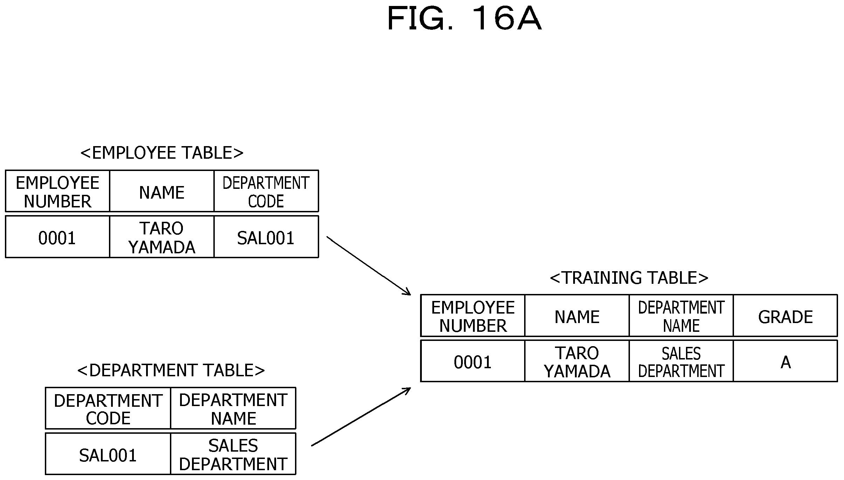

On the other hand, as illustrated in FIG. 14, it is assumed that, similarly to FIG. 13, (1) and (2) are performed, and by the confirmation in (2), (3) the server 14A for the company A confirms that there is a DB server for another company (assumed to be the company B) with which the record of Taro Yamada is synchronized. For example, it is assumed that tables as illustrated in FIG. 16A are stored in the DB server 16B for the company B. In this case, (4) the server 14A for the company A refers to the related information management table 52 to acquire information regarding tables related to an employee table.

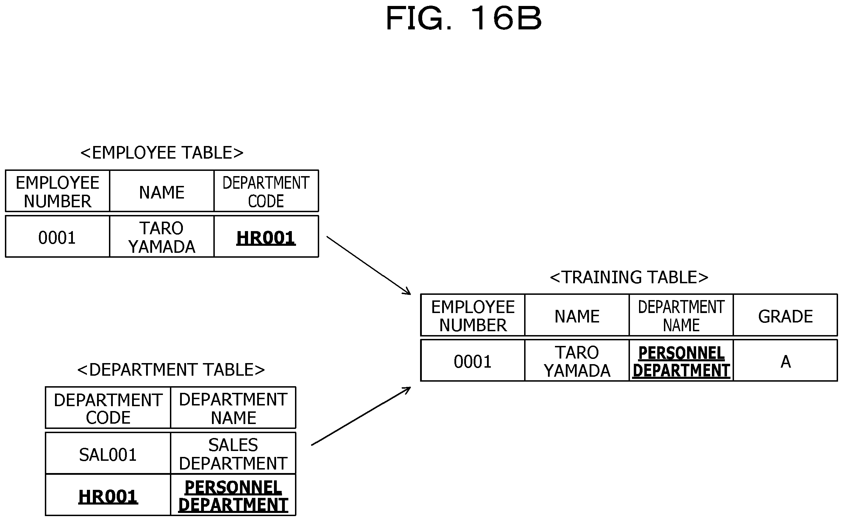

As a result, (5) it is assumed that the server 14A for the company A acquires information indicating that there is relevance between the employee table, and a training table and a department table. In this case, (6) the server 14A for the company A first updates the employee table in the DB server 16A for the company A (see FIG. 15). Then, (7) the server 14A for the company A transmits the updated record of Taro Yamada in the employee table and records in the training table and the department table related to the updated record to the DB server 16B for the company B in the same transaction (in one transaction), and updates the records. In other words, the data of each table illustrated in FIG. 16A is updated as illustrated in FIG. 16B. In this manner, when the data of the DB server 16A for the company A is updated, the synchronized data of the DB server 16B for the company B as a synchronization destination is also updated, so that it is possible to prevent data inconsistency between the DB servers.

Thereafter, (8) the server 14A for the company A notifies the client 12A for the company A of end of the data update API.

As described above in detail, according to the present embodiment, the server 14A for the company A stores data of a plurality of tables having relevance in the DB server 16A for the company A (S14 and S18 in FIG. 8). Then, when transmitting the data of the table stored in the DB server 16A for the company A to a DB server for another company, the server 14A for the company A also transmits data of a table having relevance to the data of the table (S22 to S26 in FIG. 8). With this configuration, in a case where data is synchronized in relational databases of a plurality of companies, data of a table having relevance to data of a table to be transmitted is also transmitted, and thus, it is possible to prevent data inconsistency from occurring in a transmission destination. For example, it is assumed that the training table is transmitted to the DB server 16B for the company B in a case where the data of each table in FIG. 6 is stored in the DB server 16A for the company A. In this case, when only the training table is transmitted to the DB server 16B for the company B, there is no reference destination of the name or the department name, and thus a reference error occurs. On the other hand, as in the present embodiment, the table having relevance to the table to be transmitted is also transmitted, so that it is possible to prevent a reference error from occurring. In this manner, in the present embodiment, the DB server 16A for the company A and the DB server 16B for the company B, which are distributed DBs, may link data while maintaining the functions as the relational databases. Furthermore, when the inter-organization linkage system 100 is constructed, the relational database owned by each company may be diverted, so that it is possible to reduce a cost of the system construction.

Furthermore, in the present embodiment, when the server 14A for the company A stores the data of the plurality of tables having relevance in the DB server 16A for the company A, information regarding the relevance between the respective tables is stored in the related information management table 52. Then, when transmitting the data of the table stored in the DB server 16A for the company A to the DB server for the another company, the server 14A for the company A refers to the related information management table 52 to specify the data of the table to be transmitted. With this configuration, it is possible to easily specify the data of the table to be transmitted to the DB server for the another company.

Furthermore, in the present embodiment, when transmitting the data of the table having relevance to the DB server for the another company, the server 14A for the company A performs the processing in the same transaction. With this configuration, it is possible to reliably prevent data inconsistency in the DB server for the another company.

Furthermore, in the present embodiment, in a case where the data is synchronized in the DB server for the another company, the server 14A for the company A registers a content thereof in the synchronization information management table 54. Then, in a case where the data stored in the DB server 16A for the company A is updated, the server 14A for the company A refers to the synchronization information management table 54, and when the data to be updated is synchronized in the DB server for the another company, also updates the data. In this manner, it is possible to suppress data inconsistency in the DB server of each company. For example, in the example in FIG. 16B, in a case where only the data (record) to be updated in the employee table is transmitted to the DB server 16B for the company B, the department code "HR001" does not exist in the department table, and thus inconsistency occurs. On the other hand, by also transmitting data in the department table corresponding to the data (record) to be updated in the employee table, it is possible to prevent the occurrence of inconsistency as described above.

### (Modification)

Note that, in the embodiment described above, the case has been described where the related information management table 52 is used. However, the present disclosure is not limited to this. In other words, the related information management table 52 does not necessarily have to be used. Hereinafter, an example (modification) in which the related information management table 52 is not used will be described.

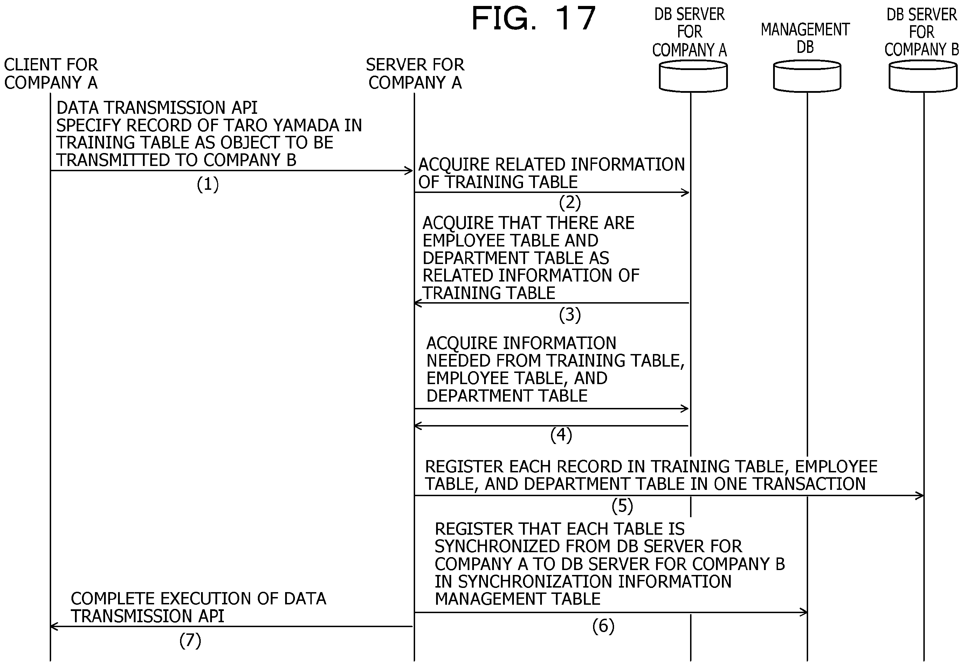

FIG. 17 illustrates a sequence diagram of table transmission processing according to the modification (a sequence diagram corresponding to FIG. 11 of the embodiment described above). In the present modification, for example, when the information regarding the table related to the training table is acquired in (2) of FIG. 17, the information is acquired from the table structure stored in the DB server 16A for the company A.

Furthermore, in the present modification, when the record in each table is registered in the DB server 16B for the company B in (5) of FIG. 17, it is confirmed that there is no difference between the table structure of the table to be registered and the table structure of the DB server 16B for the company B.

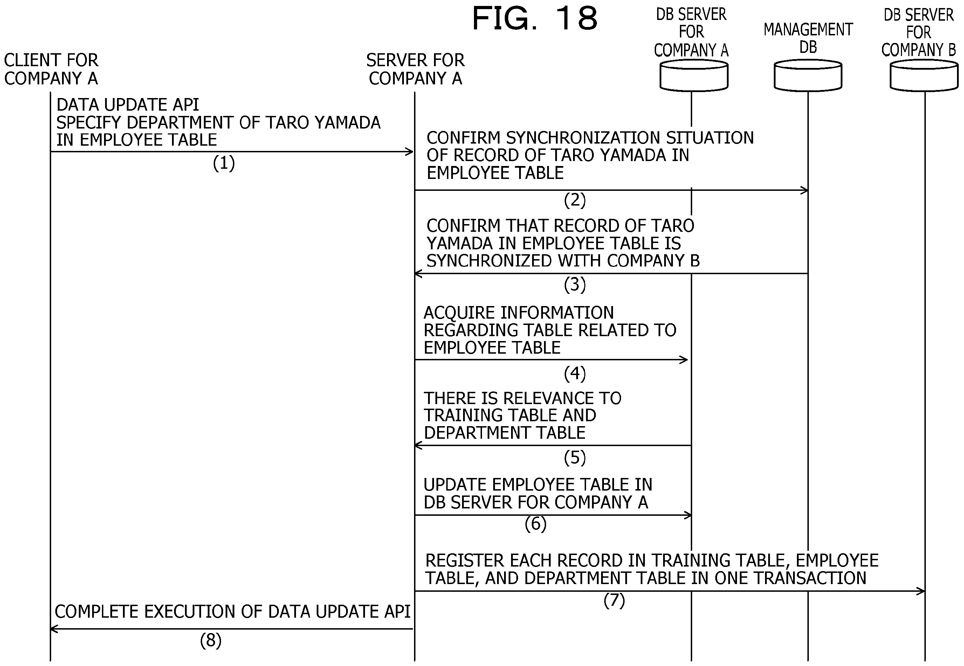

FIG. 18 illustrates a sequence diagram of data update processing according to the modification (a sequence diagram corresponding to FIG. 14 of the embodiment described above). In the present modification, for example, when the information regarding the table related to the employee table is acquired in (4) of FIG. 18, the information is acquired from the table structure stored in the DB server 16A for the company A.

Furthermore, in the present modification, when the record in each table is registered in the DB server 16B for the company B in (7) of FIG. 18, it is confirmed that there is no difference between the table structure of the table to be registered and the table structure of the DB server 16B for the company B.

In this manner, even when the related information management table 52 is not used, processing similar to that in the embodiment described above may be performed.

Note that the processing functions described above may be implemented by a computer. In that case, a program in which processing contents of functions that a processing device needs to have are described is provided. The program is executed in the computer, whereby the processing functions described above are implemented in the computer. The program in which the processing contents are described may be recorded in a computer-readable storage medium (note that a carrier wave is excluded).

In the case of distributing the program, for example, the program is sold in a form of a portable storage medium such as a digital versatile disc (DVD) or a compact disc read only memory (CD-ROM) in which the program is recorded. Furthermore, it is also possible to store the program in a storage device of a server computer, and transfer the program from the server computer to another computer via a network.

The computer that executes the program stores, for example, the program recorded in the portable storage medium or the program transferred from the server computer in a storage device of the computer. Then, the computer reads the program from the storage device of the computer, and executes processing according to the program. Note that the computer may also read the program directly from the portable storage medium and execute the processing according to the program. Furthermore, the computer may also sequentially execute the processing according to the received program each time the program is transferred from the server computer.

The embodiment described above is a preferred example of the present disclosure. However, the present disclosure is not limited to this, and various modifications may be made in a range without departing from the scope of the embodiment.

## Claims

1. A data synchronization program comprising instructions which, when executed by a first information processing device among a plurality of information processing devices that manages data in relational databases, execute the first information processing device to execute processing comprising:
storing, in a first relational database, data of a plurality of tables, each table of the plurality of tables having relevance to at least any one of the plurality of tables, the first relational database being a relational database in which the first information processing device manages data; and
in response to a request for transmitting a first table among the plurality of tables stored in the first relational database, transmitting to a second relational database in which a second information processing device manages data, data of the first table stored in the first relational database, and data of a second table that has relevance to the first table, the second information processing device being any one of the plurality of information processing devices other than the first information processing device.

2. The data synchronization program according to claim 1, the processing further including:
in a case where data of each table of the plurality of tables is stored in the first relational database, storing, in a first storage of the first relational database, information that indicates relevance with respect to the table,
wherein the transmitting includes referring the information stored in the first storage of the first relational database, to specify the data of the second table that has the relevance to the data of the first table to be transmitted to the second relational database.

3. The data synchronization program according to claim 1, wherein the transmitting of the data of the first table and the data of the second table is performed in a same transaction.

4. The data synchronization program according to claim 1, the processing further comprising:
in response to the transmitting of the data of the first table and the data of the second table, storing, in a second storage of the first relational database, information that indicates that respective data of the first and second tables stored in the first relational database has been transmitted to the second relational database; and
in a case where data of a table of the plurality of tables stored in the first relational database is updated, referring to information stored in the second storage of the first relational database, to update, when the information stored in the second storage indicates that the data of the table to be updated has been transmitted to the second relational database, the data of the table stored in the first relational database, as well as data of the table stored in the second relational database.

5. A data synchronization method implemented by a control unit of a first information processing device among a plurality of information processing devices that manages data in relational databases, the data synchronization method comprising:
storing, in a first relational database, data of a plurality of tables, each table of the plurality of tables having relevance to at least any one of the plurality of tables, the first relational database being a relational database in which the first information processing device manages data; and
in response to a request for transmitting a first table among the plurality of tables stored in the first relational database, transmitting to a second relational database in which a second information processing device manages data, data of the first table stored in the first relational database, and data of a second table that has relevance to the first table, the second information processing device being any one of the plurality of information processing devices other than the first information processing device.

6. An information processing device operable as a first information processing device among a plurality of information processing devices that manages data in relational databases, the information processing device including a control unit configured to execute processing including:
storing, in a first relational database, data of a plurality of tables, each table of the plurality of tables having relevance to at least any one of the plurality of tables, the first relational database being a relational database in which the first information processing device manages data; and
in response to a request for transmitting a first table among the plurality of tables stored in the first relational database, transmitting to a second relational database in which a second information processing device manages data, data of the first table stored in the first relational database, and data of a second table that has relevance to the first table, the second information processing device being any one of the plurality of information processing devices other than the first information processing device.
